# EUROPÄISCHE PATENTSCHRIFT

(11) **EP 1 656 295 B1**
(45) Veröffentlichungstag und Bekanntmachung des Hinweises auf die Patenterteilung: **17.01.2007**
(21) Anmeldenummer: 04762652.8
(22) Anmeldetag: 11.08.2004
(51) Int. Cl.: B64F 1/26

(54) **VORRICHTUNG ZUR STABILISIERUNG DER TRIEBWERKS- EINLAUFSTRÖMUNG BEI TRIEBWERKS-STANDLÄUFEN**
DEVICE FOR STABILIZING THE ENGINE INLET FLOW IN STATIC TESTS OF ENGINES
DISPOSITIF DE STABILISATION DU COURANT D'ENTREE D'UN GROUPE PROPULSEUR LORS D'ESSAIS AU POINT FIXE

(30) Priorität: 13.08.2003 DE 10337372
(43) Veröffentlichungstag der Anmeldung: 17.05.2006
(73) Patentinhaber: Airbus Deutschland GmbH, 21129 Hamburg (DE)
(72) Erfinder: GERHARDT, Hans-Joachim, 52072 Aachen (DE); MEESSEN, Horst, 21614 Buxtehude (DE)
(74) Vertreter: Hansmann, Dierk
(86) Internationale Anmeldenummer: PCT/DE2004/001807
(87) Internationale Veröffentlichungsnummer: WO 2005/016754

(56) Entgegenhaltungen:
- DE-A- 19 743 591
- US-A- 4 258 823
- US-B1- 6 598 384

## Beschreibung

Die Erfindung bezieht sich auf eine Vorrichtung zur Stabilisierung der Triebwerks-Einlaufströmung bei Triebwerks-Standläufen gemäß dem Oberbegriff des Anspruchs 1. Diese Vorrichtung wird bei Triebwerks-Standläufen zur Stabilisierung der Einlaufströmung eines Triebwerks, die am Triebwerkseinlauf einströmt, eingesetzt. Mit ihr wird der Aufwand für die Vorbereitung eines Triebwerks-Standlaufes, der für die Anordnung und Montage eines vor dem Triebwerk angeordneten Flächenbauteils und einschließlich dessen sachgemäße Justage anfallen wird, auf ein vertretbares Maß reduziert. Rangierprobleme, die bei einem beabsichtigten Triebwerks-Standlauf wegen Standortveränderung der benötigten vorrichtung vom Abstellplatz bis unter die Standebene der Flugzeuge oftmals einen erheblichen Aufwand verursachen, wobei hinzukommend noch der Hebe- und Justageaufwand des Flächenbauteils zu beachten ist, werden der Vergangenheit angehören, die gerade bei der Verwendung der bekannten Vorrichtungen zur Stabilisierung der Triebwerks-Einlaufströmung bei Triebwerks-Standläufen an Großraumpassagier- und - transportflugzeugen einen erheblichen Aufwand verursachen dürften.

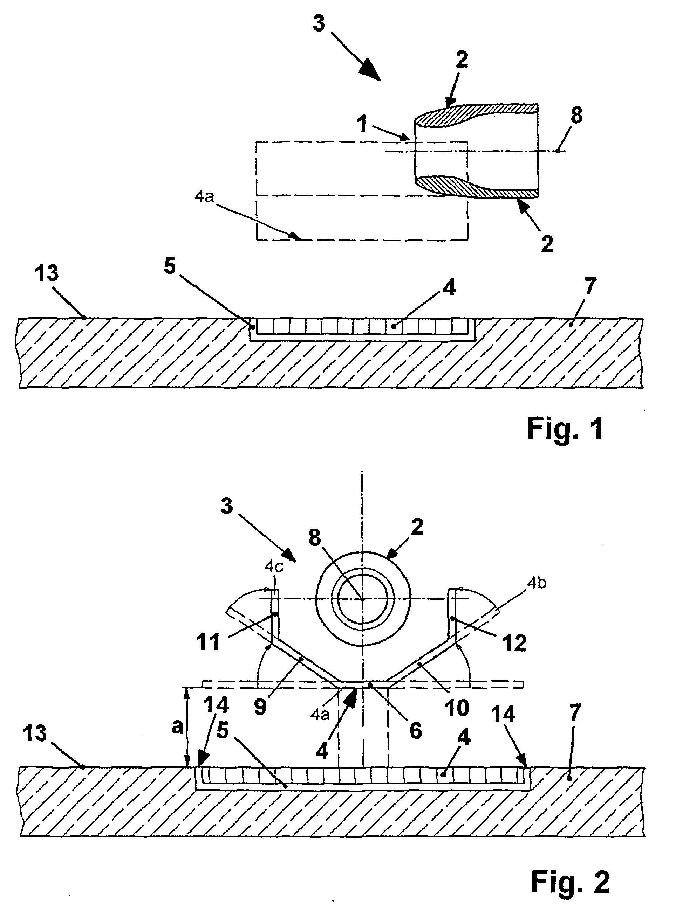

Bereits mit der DE 197 43 591 C2 ist der Fachwelt eine derartige Vorrichtung zur Stabilisierung der Triebwerks-Einlaufströmung bei Triebwerks-Standläufen bekannt gemacht worden. Aus deren Figuren 2 bis 4 mit den korrelierenden Bilderläuterungen wird der Fachmann eine Vorrichtung zur Stabilisierung der Triebwerks-Einlaufströmung bei Triebwerks-Standläufen entnehmen, die gleichermaßen ein(e Vorrichtung mit einem) luftdurchlässiges Element umfasst, das vor dem Triebwerkseinlauf angeordnet ist und sich über den Triebwerkseinlauf hinaus erstreckt. Dieses Element, das halbzylindrisch und aus einem Stück ausgebildet ist, wird während der Vorbereitungsphase zum beabsichtigten Triebwerks-Standlauf mit geeigneten Transportmitteln und Hebewerkzeugen, auf die nicht näher eingegangen wird, nahe dem Triebwerksgehäuse positioniert und dort auf sehr aufwendige Weise in eine vorgesehene Elementstellung justiert, dermaßen, dass das luftdurchlässige Element das Triebwerksgehäuse außenumfänglich teilweise umfassend, angeordnet ist. Der technologische Aufwand, den der Aufbau dieser Vorrichtung erfordern wird, wird als sehr hoch bewertet, wobei ferner zu bedenken ist, dass wahrscheinlich Gefährdungen während des Transports und des Hebevorganges des (nicht gerade leichtgewichtig ausgeführten) luftdurchlässigen Elements bis nahe dem betreffenden flügelbefestigten Triebwerk am Flugzeug sowie bei dessen Ausrichtung in eine gewünschte Position unterhalb des Triebwerksgehäuses niemals ausgeschlossen werden können, die sich ggf. nur auf verbleibende Restgefährdungen beschränken werden. Der Hintergrund der Benutzung einer derartigen Anordnung besteht deswegen, dass bei Triebwerks-Standläufen der Einfluss des (sicherlich) Luft-undurchlässigen Bodens oder Rollfeldes für ein Flugzeug sowie eine übermäßige Seitenwindeinwirkung auf die Anordnung für den Triebwerks-Standlauf zu unzulässigen Strömungszuständen führen werden, wodurch es zur Entstehung eines Spiralwirbels zwischen dem Boden und dem Triebwerkseinlauf, die eine Luftkammer bilden, kommt. Bildet sich nun ein Spiralwirbel vor dem Triebwerkseinlauf an dem genannten luftdurchlässigen Element, so kann infolge der Durchlässigkeit seiner Wandfläche Luft in einen Wirbelkern des Spiralwirbels nachströmen, wodurch sich der Druck im Wirbelkern erhöhen wird, der Drehimpuls der Luftteilchen reduziert wird und die Wirbelstärke vermindert wird.

Dabei kann beispielsweise die Reduzierung der Wirbelstärke durch das Ausblasen von Luft durch die luftdurchlässige Fläche jenes Elementes verstärkt werden. Sofern eine ausreichende Nachströmung von Luft durch dieses Element sichergestellt wird, wird die Entstehung eines ausgeprägten Spiralwirbels vollständig verhindert.

Einem interessierten Fachmann wird die Druckschrift: "DE 197 43 591 C2" noch weitere Detailinformationen vermitteln können, die entsprechende Auskunft über aerodynamische Zusammenhänge gewährt, die sich hintergründig mit den ungewünschten Strömungszuständen (Instabilitäten) während des Flugbetriebes auf ein Triebwerk und mit dem Bodeneinfluss im Triebwerksstandlauf als auch vordergründig mit der vorgestellten Vorrichtung zur Stabilisierung der Triebwerks-Einlaufströmung bei Triebwerks-Standläufen befassen.

Der dieser Erfindung nächstlegende Stand der Technik wird in der Hauptsache auf den Aufbau der Vorrichtung zur Stabilisierung der Triebwerks-Einlaufströmung bei Triebwerks-Standläufen und den begleitenden technologischen Ablauf während der Vorbereitung eines Triebwerks-Standlaufes am flügelbefestigten Triebwerk eines Flugzeuges abzielen, dem die vorgestellte Vorrichtung mit den angegebenen Nachteilen (unvermeidbare Transportwege, erschwerte Handhabung, ständige Zeitverzögerungen wegen Nachjustierung des luftdurchlässigen Elements), die es zu verbessern und ggf. abzustellen gilt, zugeordnet wird.

Demzufolge liegt der Erfindung die Aufgabe zugrunde, eine gattungsgemäße Vorrichtung zur Stabilisierung der Triebwerks-Einlaufströmung bei Triebwerks-Standläufen derart zu verbessern, dass das luftdurchlässige Element (als Bestandteil einer Vorrichtung) problemlos ohne manuellen Aufwand nahe einem flügelbefestigten Triebwerk des in die Standlauf-Einrichtung eingestellten Flugzeuges positioniert wird, wobei keine zusätzlichen Transportkapazitäten anfallen dürfen. Gefährdungen sind durch technologische Verbesserungen der bekannten Hebe- und Justage-Technologie(n) dieses Elementes vollständig abzustellen, die durch eine Verbesserung des Aufbaus des luftdurchlässigen Elements umsetzbar wird. Die Vorrichtung soll wetterunabhängig und rationell eingesetzt werden können.

Diese Aufgabe wird durch die im Anspruch 1 angegebenen Maßnahmen gelöst. In den weiteren Ansprüchen werden zweckmäßige weiterbildungen und Ausgestaltungen dieser Maßnahmen angegeben.

Die Erfindung ist in einem Ausführungsbeispiel anhand der beigefügten Zeichnungen näher erläutert. Dazu zeigen
- Fig. 1: die Vorrichtung zur Stabilisierung der Triebwerks-Einlaufströmung bei Triebwerks- Standläufen mit einem in der Rollbahn eingefassten luftdurchlässigen Element und einem oberhalb des Elements positionierten Triebwerk (Längsschnitt in der vertikalen Triebwerksachse);
- Fig. 2: das auf Höhe und nahe dem Triebwerk positionierte luftdurchlässige Element, das aus mehreren zum Triebwerksgehäuse geklappten Elementteilen integriert ist (Vertikalschnitt parallel zur Eintrittsebene des Triebwerks).

Die Vorrichtung besteht aus einer Anordnung, die in der Hauptsache - neben anderen Bestandteilen ein luftdurchlässiges Element 4 umfasst. Die Darstellung der Figuren 1 und 2 zeigen ein luftdurchlässiges Element 4, das (deutlich in der Fig. 2 erkennbar) aus mehreren (nach einer zum Triebwerksgehäuse 2) klappbaren luftdurchlässigen Elementteilen 6, 9 bis 12 (Elementflächen) integriert ist. In einer (der möglichen) Endposition(en) ist jenes luftdurchlässige Element 4 ganz nahe gelegen einem Triebwerkgehäuse 2 positioniert, welches letzteres teilweise umfassend angeordnet ist.

Zurückkommend auf die Fig. 1 wird man ersehen können, dass jenes luftdurchlässige Element 4, das aus einem ersten Elementteil 6 und weiteren Elementteilen 9 bis 12 integriert ist, anfänglich auf einem ebenflächig gestalteten Boden 7 (in Horizontallage) abgelegt ist.

Dem Boden 7 ist ein Bodenbereich ausgespart. Der Aussparung des Bodens 7 ist bodenrandseitlich eine Bodenbegrenzung 5 eingefasst, welche der (aus mehreren Elementteilen 6, 9 bis 12) integrierten Gestalt des luftdurchlässigen Elements 4 angepasst ist. Innerhalb der (bspw. mit Kantenelementen massiv ausgeführten) Bodenbegrenzung 5 ist das luftdurchlässige Element 4 ebenflächig angeordnet, dessen nicht bodenaufliegender Oberflächenbereich mit einem bodenabgewandten Seitenbereich 14 (der begrenzenden Kantenelemente) der Bodenbegrenzung 5 bündig oder wenigstens mit der Bodenoberfläche des Bodens 7 näherungsweise bündig angeordnet ist.

Unter realen Testbedingungen wird der Beobachter feststellen, dass Triebwerks-Standläufe wohl kaum auf einer Standfläche der ausgewählten Flugzeuge stattfinden werden. Aus Lärmschutzgründen werden die Standläufe in Triebwerks-Standlauf-Einrichtungen verlegt. Diese bestehen in der Regel aus drei festen Wänden und sind so ausgerichtet, dass die festen Wände den Schall zu den bebauten Gebieten hin abschirmen. Hierdurch ist die Position des Flugzeuges in der Einrichtung vorgegeben und das Flugzeug kann nicht, wie bei Standläufen im freien Gelände üblich, in Windrichtung ausgerichtet werden.

Deswegen kann man davon ausgehen, dass der Oberfläche des Bodens 7 eine Rollbahndecke 13 (Betonpiste) aufgelegt ist. Dieser Rollbahndecke 13 ist ein Deckenbereich ausgespart, welcher kongruent dem (vorher erwähnten) ausgesparten Bodenbereich angeordnet ist.

Dieser Bereich der ausgesparten Rollbahnfläche ist der (aus mehreren Elementteilen 6, 9 bis 12) integrierten Gestalt des luftdurchlässigen Elements 4 angepasst, wobei das (innerhalb der Bodenbegrenzung 5 auf einem Bodenelement mit der Unterseite aufliegende) luftdurchlässige Element 4 mit der nicht bodenaufliegenden Oberseite weitestgehend bündig mit der Oberfläche der Rollbahndecke 13 abschließen soll. Aus beabsichtigtem Grund natürlich, denn das dermaßen angeordnete luftdurchlässige Element 4 soll beim Überrollen einer Lauffläche, bspw. eines Flugzeugrades, keinen Schaden verursachen. Es wird auch dermaßen ausgebildet, dass es von einem Land- oder einem bodenkontaktierenden Luftfahrzeug überrollbar und überrollfähig ist, ohne Schaden zu nehmen. Alle diese Gegebenheiten kann man weitestgehend aus der Fig. 1 entnehmen.

Nicht in der Fig. 1 dargestellt, aber für die gewünschte Anordnung des luftdurchlässigen Elements 4 nach der Fig. 2 unerlässlich, ist eine unterhalb der Bodenauflage positionierte Hub- und Klappeinheit, die bodenversenkt installiert ist. So lässt (lassen) sich das (die) auf dem Boden 7 [oder in der Bodenbegrenzung 5 abgelegte(n)] horizontal angeordnete(n) luftdurchlässige Element 4 (horizontal gelegenen Elementteile 4, 9 bis 12) mit dem Hubmechanismus der Hub- und Klappeinheit auf eine im vertikalen Abstand a befindliche Zwischenposition 4a vertikal anheben, die unterhalb des Triebwerksgehäuses 2 befindlich und letzterem nahegelegen ist, deren bodenaufliegende Horizontallage unverändert beibehalten ist.

Damit wären die Voraussetzungen für ein Anheben des luftdurchlässigen Elements 4 auf ein Höhenniveau geschaffen, das sich nahe dem Triebwerksgehäuse 2 befindet. Es ist beabsichtigt, das luftdurchlässige Element 4 mit einem ersten luftdurchlässig ausgebildeten ebenflächigen Elementteil 6 auf eine Zwischenposition 4a zu heben, das (in dieser Endposition) aus den eingangs geschilderten Gründen unterhalb des Triebwerksgehäuses (2) angeordnet ist. In dieser Position ist die (horizontal gelegene) Anordnung des (aus mehreren Elementteilen 6, 9 bis 12 bestehenden luftdurchlässigen Elements 4 entlang einer horizontalen Triebwerksgehäuseachse 8 und parallel einem ebenflächigen Boden 7 respektive (nach Fig. 2) einer Rollbahnfläche 13 im vertikalen Abstand (a positioniert. Der Aufbau diese luftdurchlässigen Elements 4 berücksichtigt, dass flächenrandseitlich an dessen Längskanten, die entlang der Triebwerksgehäuseachse 8 gelegen sind, weitere luftdurchlässig ausgebildete ebenflächige Elementteile 9 bis 12, die aus einer (befindlichen) horizontalen Lage zum Triebwerksgehäuse 2 klappbar ausgebildet sind, seitwärts der Längskanten nachgeordnet sind.

Dieser Aufbau berücksichtigt ferner, dass dem (vorher erwähnten) ersten Elementteil 6 an einer ersten Längskante ein zweites Elementteil 9 und an einer zweiten Längskante ein drittes Elementteil 10 drehbeweglich gelagert und längskantenseitig mechanisch befestigt verbunden sind. Nebengelegen dem zweiten Elementteil 9 ist an einer dritten Längskante von letzterem ein viertes Elementteil 11 angeordnet, wobei auch nebengelegen dem dritten Elementteil 10 an einer vierten Längskante von letzterem ein fünftes Elementteil 12 angeordnet ist. Diese Elementteile 9 bis 12 sind allesamt drehbeweglich gelagert und längskantenseitig mechanisch befestigt verbunden.

Hinsichtlich der Drehbeweglichkeit und dem befestigten Verbund der Elementteile 9 bis 12 steht dem Fachmann eine breite Auswahl an geeigneten bekannten Verbindungsmöglichkeiten zweier nebengelegener Elementteile zur Verfügung, die er zweckgebunden berücksichtigen wird.

Auch ist der Hub- und Klappeinheit ein Klappmechanismus integriert, mit dem sich die weiteren Elementteile 9 bis 12, die sich dem ersten Elementteil 6 zuwendend und klappbar ausgeführt sind, aus der erwähnten zwischenposition 4a in eine Endstellung bewegen lassen. Dabei wird, je nach gewünschter Lage, das luftdurchlässige Element 4 die verschiedensten Endpositionen einnehmen. Vorzugsweise wird eine (zweite) Endposition erwähnt, die einer nahe dem Triebwerksgehäuse 2 befindlichen Endposition des luftdurchlässigen Elements 4 entsprechen wird.

Im Detail sind mit dem aus mehreren Elementteilen 6, 9 bis 12 bestehenden luftdurchlässigen Element 4 wenigstens drei Endstellungen 4a, 4b, 4c machbar, die nachfolgend angegeben werden.

Eine erste Endstellung wird als gegeben betrachtet, wenn keines der Elementteile 9 bis 12 dem ersten Elementteil 6 angewinkelt ist, so dass die der horizontalen Anordnung aller Elementteile 6, 9 bis 12 entsprechende Zwischenposition 4a mit einer ersten Endstellung übereinstimmend ist.

Eine zweite Endstellung wird erreicht, wenn das zweite und das dritte Elementteil (9, 10) dem ersten Elementteil (6) kantenrandseitlich angewinkelt ist und das zweite und das vierte Elementteil (9, 11) sowie das dritte und das fünfte Elementteil (10, 12) nebeneinander liegend und zueinander nicht abgewinkelt sowie abfluchtend in einer geraden Linie angeordnet sind. Sofern diese abfluchtenden Elementteile 9 bis 12 mit dem Klappmechanismus der Hub und Klappeinheit aus der Zwischenposition 4a bewegt (gedrückt) und dem ersten Elementteil 6 kantenrandseitlich bis in eine Stellung nahe dem Triebwerksgehäuse 2 abgewinkelt werden, ist die zweite Endstellung 4b erreicht.

Anderenfalls wird eine dritte Endstellung erreicht, wenn das zweite und das dritte Elementteil 9, 10 dem ersten Elementteil 6 kantenrandseitlich angewinkelt wird und das vierte Elementteil 11 dem zweiten Elementteil 9 sowie das fünfte Elementteil 12 dem dritten Elementteil 10 zudem noch abgewinkelt wird. Danach ist die dritte Endstellung realisiert, wenn das vierte und fünfte Elementteil 11, 12 zum ersten Elementteil 6 rechtwinklig angeordnet ist, wobei sich das dritte und vierte Elementteil 10, 11 mit dem Klappmechanismus der Hub und Klappeinheit aus einer der zweiten Endstellung 4a entsprechenden Position in eine dritte Endstellung 4c bewegen lassen.

Letzterer Endstellung 4c wird ein Vorzug eingeräumt, weil damit der eingangs genannte Spiralwirbel bei dieser Konstellation am effektivsten beeinflusst, also dessen störender Einfluss verhindert werden kann.

Dem wird noch das Folgende hinzugefügt. Mit dem Hubmechanismus der Hub- und Klappeinheit wird ein vertikales Heben aller Elementteile 6, 9 bis 12 des luftdurchlässigen Elements 4 umgesetzt. Außerdem wird mit dem Klappmechanismus der Hub- und Klappeinheit ein Klappen der weiteren Elementteile 9 bis 12 realisiert, das durchaus während des Hebevorganges stattfinden wird.

Das erste Elementteil 6 kann quader- oder würfelförmig ausgebildet sein, dessen Grund- und Deckfläche quadrat- oder rechteckförmig gestaltet ist. Die weiteren Elementteile 9 bis 12 können verschiedenartig, vorzugsweise quader- oder würfelförmig, oder einheitlich nur quadrat- oder würfelförmig ausgebildet sein, deren Grund oder Deckfläche quadrat- oder rechteckförmig gestaltet ist. Die Gestalt der Elementteile 6, 9 bis 12 wird der gewünschten Wahl zu dem beabsichtigten Zweck überlassen bleiben.

Es ist beabsichtigt, dass das erste Elementteil 6 und die weiteren Elementteile 9 bis 12 entlang der Triebwerksgehäuseachse 8 eines Triebwerks 3 einheitlich lang ausgeführt sind. Außerdem könnte beabsichtigt werden, dass die Länge des vierten und des fünften rechtwinklig angeordneten Elementteils 11, 12 zueinander betrachtet unterschiedlich lang ausgeführt ist.

Letztlich wird noch auf das vorgesehene Material für die Elementteile 6, 9 bis 12 näher eingegangen, wonach ein Material der Elementteile 6, 9 bis 12 berücksichtigt wird, das druck- und wetterresistent sowie weitestgehend leichtgewichtig ausgeführt ist. Das Material könnte metallen oder kunststoffartig bestehen oder sich aus beiden Komponenten zusammensetzen. Dabei wäre denkbar, dass ein geeigneter Kunststoff (Thermoplast) entsprechende Beachtung finden, der mit Metallpartikeln oder sonstigen zweckdienlichen Substanzen, die der Materialfestigkeit nützlich sind, versetzt ist. Auch wäre denkbar, dass die Elementteile 6, 9 bis 12 aus einem Metallkern und einem letzteren umgebenden Kunststoff, der wenigstens dem Metallkern kunststoffbeschichtet ist, aufgebaut sind.

Zusammengefasst besteht die Vorrichtung zur Stabilisierung der Triebwerks-Einlaufströmung bei Triebwerks-Standläufen aus einer Anordnung, die in der Hauptsache ein aus mehreren Elementteilen 6, 9 bis 12 gebildetes luftdurchlässiges Element 4 aufweist, die zu einem Triebwerksgehäuse 2 klappbar ausgebildet sind. Durch einen geeigneten Hub- und Klappmechanismus einer Hub- und Klappeinheit kann das luftdurchlässige Element 4, wie in der Fig. 1 gestrichelt hervorgehoben, in eine Zwischenposition 4a, die ggf. einer ersten Endstellung entsprechen könnte, angehoben werden. Das Anheben und Klappen des luftdurchlässigen Elements 4 wird schematisch in der Fig. 2 dargestellt. Die zweiten bis fünften Elementteile 9 bis 12 realisieren gemeinsam mit einem horizontal (in der Zwischenstellung 4a verharrenden) ersten Teilelement 6 unterschiedliche Endstellungen des vorgestellten luftdurchlässigen Elements 4.

## Patentansprüche

1. Vorrichtung zur Stabilisierung der Triebwerks-Einlaufströmung bei Triebwerks-Standläufen, die zur Verbesserung der Triebwerks-Einlaufströmung eingangs eines Triebwerkseinlaufs (1) bei Triebwerks-Standläufen eingesetzt wird, bestehend aus einem luftdurchlässigen Element (4), welches in einer Endposition nahe gelegen einem Triebwerkgehäuse .(2) und letzteres teilweise umfassend angeordnet ist, **dadurch gekennzeichnet, dass** das luftdurchlässige Element (4) mit einem ersten luftdurchlässig ausgebildeten ebenflächigen Elementteil (6), das unterhalb des Triebwerksgehäuses (2) angeordnet ist, welches entlang einer horizontalen Triebwerksgehäuseachse (8) und parallel einem ebenflächigen Boden (7) im vertikalen Abstand (a) positioniert ist, gebildet ist, dem flächenrandseitlich an dessen Längskanten, die entlang der Triebwerksgehäuseachse (8) gelegen sind, weitere luftdurchlässig ausgebildete ebenflächige Elementteile (9 bis 12), die aus einer befindlichen horizontalen Lage zum Triebwerksgehäuse (2) klappbar ausgebildet sind, seitwärts der Längskanten nachgeordnet sind.

2. Vorrichtung nach Anspruch 1, **dadurch gekennzeichnet, dass** dem ersten Elementteil (6) an einer ersten Längskante ein zweites Elementteil (9) und an einer zweiten Längskante ein drittes Elementteil (10) drehbeweglich gelagert und längskantenseitig mechanisch befestigt sind.

3. Vorrichtung nach Anspruch 2, **dadurch gekennzeichnet, dass** nebengelegen dem zweiten Elementteil (9) an einer dritten Längskante von letzterem ein viertes Elementteil (11) und nebengelegen dem dritten Elementteil (10) an einer vierten Längskante von letzterem ein fünftes Elementteil (12) angeordnet ist, die drehbeweglich gelagert und längskantenseitig mechanisch befestigt sind.

4. Vorrichtung nach Anspruch 1, **dadurch gekennzeichnet, dass** das luftdurchlässige Element (4), das aus dem ersten Elementteil (6) und den weiteren Elementteilen (9 bis 12) integriert ist, anfänglich auf einem ebenflächig gestalteten Boden (7) (in Horizontallage) abgelegt ist, dem unterhalb der Bodenauflage eine Hub- und Klappeinheit positioniert ist, die bodenversenkt installiert ist, mit deren Hubmechanismus sich die horizontal gelegenen Elementteile (4, 9 bis 12) auf eine im vertikalen Abstand (a) befindliche Zwischenposition (4a), die unterhalb des Triebwerksgehäuses (2) befindlich und letzterem nahegelegen ist, vertikal heben lassen, deren bodenaufliegende Horizontallage unverändert beibehalten ist.

5. Vorrichtung nach Anspruch 4, **dadurch gekennzeichnet, dass** dem Boden (7) ein Bodenbereich ausgespart ist, dem bodenrandseitlich der Aussparung eine Bodenbegrenzung (5) eingefasst ist, welche der (aus mehreren Elementteilen 6, 9 bis 12) integrierten Gestalt des luftdurchlässigen Elements (4) angepasst ist, innerhalb derer das luftdurchlässige Element (4) ebenflächig angeordnet ist, dessen nicht bodenaufliegender Oberflächenbereich mit einem bodenabgewandten Seitenbereich (14) der Bodenbegrenzung (5) bündig oder wenigstens mit der Bodenoberfläche des Bodens (7) näherungsweise bündig angeordnet ist.

6. Vorrichtung nach den Ansprüchen 1 und 4, **dadurch gekennzeichnet, dass** der Hub- und Klappeinheit ein Klappmechanismus integriert ist, mit dem sich die weiteren Elementteile (9 bis 12), die sich dem ersten Elementteil (6) zuwendend klappbar ausgeführt sind, aus deren Zwischenposition (4a) in eine Endstellung bewegen lassen, die verschiedenen Endpositionen des luftdurchlässigen Elements (4), vorzugsweise einer nahe dem Triebwerksgehäuse (2) befindlichen Endposition des luftdurchlässigen Elements (4), entsprechend ist.

7. Vorrichtung nach Anspruch 6, **dadurch gekennzeichnet, dass** die Endstellung der einzelnen weiteren Elementteile (9 bis 12) unterschiedlich ist, dermaßen, dass a) das zweite und das dritte Elementteil (9, 10) dem ersten Elementteil (6) kantenrandseitlich angewinkelt ist und das zweite und das vierte Elementteil (9, 11) sowie das dritte und das fünfte Elementteil (10, 12) nebeneinander liegend und zueinander nicht abgewinkelt sowie abfluchtend in einer geraden Linie angeordnet sind, wobei sich diese abfluchtenden Elementteile (9 bis 12) mit dem Klappmechanismus der Hub und Klappeinheit aus der Zwischenposition (4a) in eine zweite Endstellung (4b) bewegen lassen, oder b) das zweite und das dritte Elementteil (9, 10) dem ersten Elementteil (6) kantenrandseitlich angewinkelt ist und das vierte Elementteil (11) dem zweiten Elementteil (9) sowie das fünfte Elementteil (12) dem dritten Elementteil (10) abgewinkelt ist, dermaßen, dass das vierte und fünfte Elementteil (11, 12) rechtwinklig zum ersten Elementteil (6) angeordnet ist, wobei sich das dritte und vierte Elementteil (10, 11) mit dem Klappmechanismus der Hub und Klappeinheit aus einer der zweiten Endstellung (4a) entsprechenden Position in eine dritte Endstellung (4c) bewegen lassen, c) keines der Elementteile (9 bis 12) dem ersten Elementteil (6) angewinkelt ist, so dass die der horizontalen Anordnung aller Elementteile (6, 9 bis 12) entsprechende Zwischenposition (4a) mit einer ersten Endstellung übereinstimmend ist.

8. Vorrichtung nach den Ansprüchen 4 und 6, **dadurch gekennzeichnet, dass** mit dem Hubmechanismus ein vertikales Heben aller Elementteile (6, 9 bis 12) des luftdurchlässigen Elements (4) und mit dem Klappmechanismus während des Hebevorganges außerdem das Klappen der weiteren Elementteile (9 bis 12) realisiert ist.

9. Vorrichtung nach Anspruch 1, **dadurch gekennzeichnet, dass** das erste Elementteil (6) quader- oder würfelförmig ausgebildet ist, dessen Grund- und Deckfläche quadrat- oder rechteckförmig gestaltet ist.

10. Vorrichtung nach Anspruch 1, **dadurch gekennzeichnet, dass** die weiteren Elementteile (9 bis 12) verschiedenartig, vorzugsweise quader- oder würfelförmig, oder einheitlich nur quadrat- oder würfelförmig ausgebildet sind, deren Grund oder Deckfläche quadrat- oder rechteckförmig gestaltet ist.

11. Vorrichtung nach Anspruch 10, **dadurch gekennzeichnet, dass** das erste Elementteil (6) und die weiteren Elementteile (9 bis 12) entlang der Triebwerksgehäuseachse (8) einheitlich lang ausgeführt sind.

12. Vorrichtung nach Anspruch 7, **dadurch gekennzeichnet, dass** die Länge des vierten und des fünften rechtwinklig angeordneten Elementteils (11, 12) zueinander betrachtet unterschiedlich lang ausgeführt ist.

13. Vorrichtung nach den Ansprüchen 4 und 5, **dadurch gekennzeichnet, dass** der Oberfläche des Bodens (7) eine Rollbahndecke (13) aufgebracht ist, dem ein Deckenbereich, der kongruent dem ausgesparten Bodenbereich angeordnet ist, ausgespart ist, welcher der (aus mehreren Elementteilen 6, 9 bis 12) integrierten Gestalt des luftdurchlässigen Elements (4) angepasst ist, das mit der nicht bodenaufliegenden Oberseite weitestgehend bündig mit der Oberfläche der Rollbahndecke (13) angeordnet ist.

14. Vorrichtung nach den Ansprüchen 5 und 13, **dadurch gekennzeichnet, dass** das erste Elementteil (6) und die weiteren Elementteile (9 bis 12) des bodenaufliegenden oder innerhalb der Bodenbegrenzung (5) angeordneten luftdurchlässigen Elements (4) dermaßen ausgebildet ist, dass es von einem Land- oder einem bodenkontaktierenden Luftfahrzeug überrollbar und überrollfähig ist, ohne Schaden zu nehmen.

15. Vorrichtung nach Anspruch 14, **dadurch gekennzeichnet, dass** das Material der Elementteile (6, 9 bis 12) druck- und wetterresistent sowie weitestgehend leichtgewichtig ausgeführt ist.

16. Vorrichtung nach Anspruch 15, **dadurch gekennzeichnet, dass** das Material metallen oder kunststoffartig oder ein aus beiden Komponenten bestehendes Material ist.

17. Vorrichtung nach Anspruch 16, **dadurch gekennzeichnet, dass** das Material ein Kunststoff ist, der mit Metallpartikeln oder sonstigen zweckdienlichen Substanzen, die der Materialfestigkeit nützlich sind, versetzt ist.

18. Vorrichtung nach den Ansprüchen 14 bis 16, **dadurch gekennzeichnet, dass** die Elementteile (6, 9 bis 12) aus einem Metallkern einem letzteren umgebenden Kunststoff, der wenigstens dem Metallkern kunststoffbeschichtet ist, aufgebaut sind.

## Claims

1. Device for stabilising the engine intake flow when running static tests on an engine, used as a means of improving the engine intake flow at the inlet of an engine intake (1) during static engine tests, comprising an air-permeable element (4) which is disposed in an end position close to an engine housing (2) and partially surrounding the latter, **characterised in that** the air-permeable element (4) comprises a first flat air-permeable element (6) disposed underneath the engine housing (2), which is positioned along a horizontal engine housing axis (8) and parallel with a flat ground (7) at a vertical distance (a), downstream of which, to the side of the surface rim at the longitudinal edges thereof, other flat air-permeable elements (9 to 12) are disposed, positioned along the engine housing axis (8) to the side of the longitudinal edges, which can be folded out of a horizontal position with respect to the engine housing (2).

2. Device as claimed in claim 1, **characterised in that** the first element part (6) has a second element part (9) rotatably mounted on a first longitudinal edge and a third element part (10) rotatably mounted on a second longitudinal edge and mechanically secured at the longitudinal edge side.

3. Device as claimed in claim 2, **characterised in that**, disposed adjacent to the second element part (9) on a third longitudinal edge of the latter is a fourth element part (11) and, disposed adjacent to the third element part (10) on a fourth longitudinal edge of the latter is a fifth element part (12), which are mounted so as to be rotatable and mechanically secured at the longitudinal edge side.

4. Device as claimed in claim 1, **characterised in that** the air-permeable element (4) integrating the first element part (6) and the other element parts (9 to 12) is firstly deposited on a flat piece of ground (7) (in the horizontal position), with respect to which a lifting and folding unit is positioned underneath the ground support, which is installed recessed into the ground, the lifting mechanism of which enables the horizontally positioned element parts (4, 9 to 12) to be lifted vertically by a vertical distance (a) into an intermediate position (4a) disposed underneath the engine housing (2) and close to the latter, which remains unchanged in terms of its horizontal position lying on the ground.

5. Device as claimed in claim 4, **characterised in that** a ground area is cut out from the ground (7) and a ground boundary (5) is contained in the ground periphery of the cut-out which is adapted to the integrated shape (incorporating several element parts 6, 9 to 12) of the air-permeable element (4), within which the air-permeable element (4) is positioned flat, the top surface area of which that is not lying on the ground being disposed with a side region (14) of the ground boundary (5) which is remote from the ground flush with or at least approximately flush with the ground surface of the ground (7).

6. Device as claimed in claims 1 and 4, **characterised in that** the lifting and folding unit has an integrated folding mechanism, by means of which the other element parts (9 to 12) designed to be folded so that they face the first element part (6) can be moved out of their intermediate position (4a) into an end position corresponding to the different end positions of the air-permeable element (4), preferably an end position of the air-permeable element (4) disposed close to the engine housing (2).

7. Device as claimed in claim 6, **characterised in that** the end position of the individual other element parts (9 to 12) differs to the degree that, a) the second and third element parts (9, 10) are angled onto the first element part (6) at their edge rim side, and the second and the fourth element part (9, 11) as well as the third and the fifth element part (10, 12) lie adjacent to one another and not at an angle with respect to one another and are disposed in alignment in a straight line, and these aligned element parts (9 to 12) can be moved by means of the folding mechanism of the lifting and folding unit out of the intermediate position (4a) into a second end position (4b), or b) the second and the third element part (9, 10) are angled onto the first element part (6) at their edge rim side and the fourth element part (11) is angled with respect to the second element part (9) and the fifth element part (12) is angled relative to the third element part (10) so that the fourth and fifth element part (11, 12) is disposed at a right angle with respect to the first element part (6), and the third and fourth element part (10, 11) can be moved by means of the folding mechanism of the lifting and folding unit out of a position corresponding to the second end position (4a) into a third end position (4c), or c) none of the element parts (9 to 12) is angled onto the first element part (6) so that the intermediate position (4a) corresponding to the horizontal disposition of all the element parts (6, 9 to 12) coincides with a first end position.

8. Device as claimed in claims 4 and 6, **characterised in that** all the element parts (6, 9 to 12) of the air-permeable element (4) are lifted vertically by means of the lifting mechanism and the other element parts (9 to 12) are also folded by the folding mechanism during the lifting operation.

9. Device as claimed in claim 1, **characterised in that** the first element part (6) is of a cuboid or cubed shape, the base and top surface of which is square or rectangular.

10. Device as claimed in claim 1, **characterised in that** the other element parts (9 to 12) are differently shaped, preferably of a cuboid or cubed shape, or are uniformly only of a cuboid or cubed shape, the base or top surface of which is square or rectangular in shape.

11. Device as claimed in claim 10, **characterised in that** the first element part (6) and the other element parts (9 to 12) are of a uniform length along the engine housing axis (8).

12. Device as claimed in claim 7, **characterised in that** the length of the fourth and the fifth element part (11, 12) disposed at a right angle differs in length as viewed relative to one another.

13. Device as claimed in claims 4 and 5, **characterised in that** a taxiway cover (13) is placed on the surface of the ground (7) from which is cut out a cover area disposed congruently with the cut-out ground area adapted to the integrated shape of the air-permeable element (4) (incorporating several element parts 6, 9 to 12), which is disposed with the top face that is not lying on the ground essentially flush with the top face of the taxiway cover (13).

14. Device as claimed in claims 5 and 13, **characterised in that** the fist element part (6) and the other element parts (9 to 12) of the air-permeable element (4) lying on the ground or within the ground boundary (5) are designed so that it can be driven over and is capable of being driven over by a land vehicle or an aircraft in contact with the ground without being damaged.

15. Device as claimed in claim 14, **characterised in that** the material of the element parts (6, 9 to 12) is designed to be resistant to pressure and weather and as lightweight as possible.

16. Device as claimed in claim 15, **characterised in that** the material is metal or plastic-type material or a material incorporating the two components.

17. Device as claimed in claim 16, **characterised in that** the material is a plastic, which is displaced with metal particles or other substances which expediently enhance the material strength.

18. Device as claimed in claims 14 to 16, **characterised in that** the element parts (6, 9 to 12) are made up of a metal core, a plastic enclosing the latter which at least provides the metal core with a plastic coating.

## Revendications

1. Dispositif de stabilisation du courant d'entrée de groupe propulseur lors d'essais au point fixe de groupes propulseurs, qui est utilisé pour améliorer le courant d'entrée de groupes propulseurs au niveau d'une entrée (1) de groupe propulseur lors d'essais au point fixe de groupes propulseurs, constitué d'un élément (4) perméable à l'air qui est disposé dans une position finale, à proximité d'un carter (2) de groupe propulseur, en entourant celui-ci en partie, **caractérisé en ce que** l'élément (4) perméable à l'air est formé avec une première partie d'élément (6) plane, perméable à l'air, installée sous le carter (2) de groupe propulseur et positionnée le long d'un axe (8) horizontal de carter de groupe propulseur, parallèlement à un sol (7) plan, à la distance verticale (a), partie d'élément sur laquelle sont réalisées des parties d'élément (9 à 12) supplémentaires planes, perméables à l'air, qui sont disposées sur les côtés des bords longitudinaux de cette partie d'élément situés le long de l'axe (8) de carter de groupe propulseur et peuvent être amenées à partir d'une position horizontale, par basculement, en direction du carter (2) de groupe propulseur.

2. Dispositif selon la revendication 1, **caractérisé en ce qu'**une deuxième partie d'élément (9) est montée sur un premier bord longitudinal et une troisième partie d'élément (10) est montée sur un deuxième bord longitudinal de la première partie d'élément (6), avec possibilité de rotation et fixation mécanique sur les bords longitudinaux.

3. Dispositif selon la revendication 2, **caractérisé en ce qu'**une quatrième partie d'élément (11) est disposée sur un troisième bord longitudinal, sur le côté de la deuxième partie d'élément (9), et, à côté de la troisième partie d'élément (10), une cinquième partie d'élément (12) est disposée sur un quatrième bord longitudinal de cette troisième partie, chaque fois avec possibilité de rotation et fixation mécanique sur les bords longitudinaux.

4. Dispositif selon la revendication 1, **caractérisé en ce que** l'élément (4) perméable à l'air, qui est constitué de la première partie d'élément (6) et des parties d'élément (9 à 12) supplémentaires, est initialement déposé sur un sol (7) plan (en position horizontale), un moyen de levage et de basculement étant placé sous le support au sol, en étant encastré dans le sol, dont le mécanisme de levage permet de soulever verticalement les parties d'élément (4, 9 à 12) horizontales jusqu'à une position intermédiaire (4a) qui est située à la distance verticale (a), en dessous du carter (2) de groupe propulseur et à proximité de celui-ci, la position horizontale, appliquée au sol, des parties d'élément étant conservée.

5. Dispositif selon la revendication 4, **caractérisé en ce que** dans le sol (7), il est prévu une zone évidée, sur les bords de laquelle est installée une délimitation de sol (5) qui est adaptée à la forme d'ensemble (constituée de plusieurs parties d'élément 6, 9 à 12) de l'élément (4) perméable à l'air et dans laquelle l'élément (4) perméable à l'air est disposé à plat, la zone de surface de cet élément qui n'est pas en contact avec le sol étant alignée avec une zone latérale (14), éloignée du sol, de la délimitation de sol (5) ou étant au moins approximativement alignée avec la surface du sol (7).

6. Dispositif selon les revendications 1 et 4, **caractérisé en ce que** le moyen de levage et de basculement comporte un mécanisme de basculement intégré qui permet d'amener les parties d'élément (9 à 12) supplémentaires, agencées avec possibilité de basculement en direction de la première partie d'élément (6), de leur position intermédiaire (4a) dans une position finale qui correspond à différentes positions terminales de l'élément (4) perméable à l'air, de préférence à une position finale de l'élément (4) perméable à l'air située à proximité du carter (2) de groupe propulseur.

7. Dispositif selon la revendication 6, **caractérisé en ce que** la position finale des différentes parties d'élément (9 à 12) supplémentaires est différente, de manière telle que a) les deuxième et troisième parties d'élément (9, 10) sont disposées sur les bords de la première partie d'élément (6), en formant un angle avec celle-ci, et les deuxième et quatrième parties d'élément (9, 11) ainsi que les troisième et cinquième parties d'élément (10, 12) sont disposées l'une à côté de l'autre, sans former un angle entre elles, et sont alignées dans une ligne droite, ces parties d'élément (9 à 12) alignées pouvant être amenées, par le mécanisme de basculement du moyen de levage et de basculement, de la position intermédiaire (4a) dans une deuxième position terminale (4b), ou b) les deuxième et troisième parties d'élément (9, 10) sont disposées sur les bords de la première partie d'élément (6), en formant un angle avec celle-ci, et la quatrième partie d'élément (11) formant un angle avec la deuxième partie d'élément (9) et la cinquième partie d'élément (12) formant un angle avec la troisième partie d'élément (10), de telle sorte que les quatrième et cinquième parties d'élément (11, 12) soient disposées à angle droit par rapport à la première partie d'élément (6), les troisième et quatrième parties d'élément (10, 11) pouvant être amenées, par le mécanisme de basculement du moyen de levage et de basculement, d'une position correspondant à la deuxième position intermédiaire (4a) dans une troisième position terminale (4c), ou c) aucune des parties d'élément (9 à 12) ne forme un angle avec la première partie d'élément (6), de sorte que la position intermédiaire (4a), correspondant à la disposition horizontale de toutes les parties d'élément (6, 9 à 12), coïncide avec une première position finale.

8. Dispositif selon les revendications 4 et 6, **caractérisé en ce que** le mécanisme de levage réalise un levage vertical de toutes les parties d'élément (6, 9 à 12) de l'élément (4) perméable à l'air, et le mécanisme de basculement réalise, pendant l'opération de levage, en outre le basculement des parties d'élément (9 à 12) supplémentaires.

9. Dispositif selon la revendication 1, **caractérisé en ce que** la première partie d'élément (6) est conformée en parallélépipède ou en cube, dont les surfaces de base et de couverture sont conformées en carrés ou en rectangles.

10. Dispositif selon la revendication 1, **caractérisé en ce que** les parties d'élément (9 à 12) supplémentaires sont réalisées avec des formes différentes, de préférence de parallélépipède ou de cube, ou avec des formes identiques, seulement de parallélépipède ou seulement de cube, dont la surface de base ou de couverture est configurée en carré ou en rectangle.

11. Dispositif selon la revendication 10, **caractérisé en ce que** la première partie d'élément (6) et les parties d'élément (9 à 12) supplémentaires sont réalisées de manière uniforme avec la même longueur dans le sens de l'axe (8) de carter de groupe propulseur.

12. Dispositif selon la revendication 7, **caractérisé en ce que** les quatrième et cinquième parties d'élément (11, 12) disposées à angle droit, comparées l'une à l'autre, présentent des longueurs différentes.

13. Dispositif selon les revendications 4 et 5, **caractérisé en ce qu'**un revêtement de piste de roulement (13) est appliqué sur la surface du sol (7), revêtement dans lequel est évidée une zone qui coïncide avec la zone évidée dans le sol et est adaptée à la forme intégrale (constituée de plusieurs parties d'élément (6, 9 à 12) de l'élément (4) perméable à l'air dont la surface qui n'est pas en contact avec le sol est dans une large mesure alignée avec le revêtement (13) de la piste de roulement.

14. Dispositif selon les revendications 5 et 13, **caractérisé en ce que** la première partie d'élément (6) et les autres parties d'élément (9 à 12) de l'élément (4) perméable à l'air, appliqué sur le sol ou disposé dans la délimitation de sol (5), sont réalisées de manière telle qu'un aéronef en contact avec la terre ou le sol puisse rouler sur cet élément sans le détériorer.

15. Dispositif selon la revendication 14, **caractérisé en ce que** le matériau des parties d'élément (6, 9 à 12) est conçu de manière à résister à la pression et aux intempéries et, dans une large mesure, avec un faible poids.

16. Dispositif selon la revendication 15, **caractérisé en ce que** le matériau est un métal ou une matière plastique ou un matériau constitué de ces deux composants.

17. Dispositif selon la revendication 16, **caractérisé en ce que** le matériau est une matière plastique à laquelle sont mélangées des particules métalliques ou d'autres substances utiles pouvant contribuer à la résistance du matériau.

18. Dispositif selon les revendications 14 à 16, **caractérisé en ce que** les parties d'élément (6, 9 à 12) sont constituées d'un coeur métallique et d'une matière plastique entourant ce dernier, la matière plastique recouvrant au moins en tant que revêtement le coeur métallique.
